# EUROPÄISCHE PATENTSCHRIFT

(11) **EP 0 964 739 B1**
(45) Veröffentlichungstag und Bekanntmachung des Hinweises auf die Patenterteilung: **17.07.2002**
(21) Anmeldenummer: 98963314.4
(22) Anmeldetag: 02.11.1998
(51) Int. Cl.: B01F 3/04

(54) **VERFAHREN ZUM ANREICHERN EINER FLÜSSIGKEIT MIT EINEM GAS, VORZUGSWEISE ZUM ANREICHERN VON WASSER MIT SAUERSTOFF, UND VORRICHTUNG ZUR DURCHFÜHRUNG DES VERFAHRENS**
PROCESS AND DEVICE FOR ENRICHING A LIQUID WITH A GAS, PREFERABLY FOR ENRICHING WATER WITH OXYGEN
PROCEDE ET DISPOSITIF SERVANT A ENRICHIR UN LIQUIDE EN GAZ, DE PREFERENCE, A ENRICHIR DE L'EAU EN OXYGENE

(30) Priorität: 06.11.1997 DE 19749020; 20.06.1998 DE 19827613
(43) Veröffentlichungstag der Anmeldung: 22.12.1999
(73) Patentinhaber: KKB O2 Fluid Production Gmbh, 20097 Hamburg (DE)
(72) Erfinder: KURZER, Fritz, D-27711 Osterholz-Scharmbeck (DE); KURZER, Frank, D-27711 Osterholz-Scharmbeck (DE)
(74) Vertreter: Jabbusch, Wolfgang, Dr.Jur. Jabbusch, Wehser & Lauerwald Patentanwälte
(86) Internationale Anmeldenummer: DE9803190
(87) Internationale Veröffentlichungsnummer: WO9924156

(56) Entgegenhaltungen:
- DE-A- 2 358 591
- US-A- 3 926 588
- US-A- 4 100 062
- US-A- 4 317 731
- US-A- 4 735 750

## Beschreibung

Die Erfindung betrifft ein Verfahren zum Anreichern einer Flüssigkeit mit einem Gas nach dem Oberbegriff des Patentanspruchs 1.

Die Erfindung betrifft zudem eine Vorrichtung zur Durchführung des Verfahrens nach dem Oberbegriff des Patentanspruchs 4.

Sämtliche den Stoffwechsel eines menschlichen Organismus ausbildende Lebensprozesse benötigen Sauerstoff. Dazu ist es erforderlich, daß der menschliche Organismus über die Atmung genügend Sauerstoff aufnimmt. Es wurden jedoch gattungsgemäße Verfahren entwickelt, um gezielt neben der Atmung weiteren Sauerstoff dem Organismus zuzuführen. Die Zuführung von zusätzlichem Sauerstoff kann einerseits zur allgemeinen Erhöhung der Leistungsfähigkeit bzw. des Wohlbefindens durchgeführt werden, jedoch kann sie insbesondere bei kranken Menschen auch für eine Heilbehandlung bzw. als begleitende Maßnahme zu einer Heilbehandlung eingesetzt werden.

Ein Verfahren der eingangs genannten Gattung ist aus der US 4,317,731 bekannt. Dort wird zunächst unter Druck eine Flüssigkeit mit Gas angereichert, und es erfolgt anschließend ein Expandieren der angereicherten Flüssigkeit während ihres Abführens.

Die durch das bekannte Verfahren erreichte Konzentration von Gas in der Flüssigkeit ist relativ gering.

In der DE-OS 23 58 591 wird noch ein Verfahren zum Herstellen eines karbonisierten Produkts offenbart, bei dem zur Vermeidung übermäßiger Produktkarbonisierung eine gesteuerte Druckverringerung vorgenommen wird.

Der Erfindung liegt die Aufgabe zugrunde, ein Verfahren der oben genannten Gattung aufzuzeigen, mit dem eine Flüssigkeit mit Gas derart anreicherbar ist, daß sie eine hohe Konzentration von Gas aufweist, wobei der Verbrauch des Gases reduziert ist. Zudem soll eine Vorrichtung zur Durchführung dieses Verfahrens aufgezeigt werden.

Diese Aufgabe ist verfahrensseitig erfindungsgemäß dadurch gelöst, daß durch ein Drucksystem wenigstens zwei Druckabbaubehälter bereitgestellt werden, in welchen wechselseitig die abgeführte Flüssigkeit expandiert wird, wobei in den Druckabbaubehältern angeordnetes Restgas wechselseitig in den Druckabbaubehälter geführt wird, in welchem gegenwärtig keine Expansion der zugeführten Flüssigkeit erfolgt.

Bei dem erfindungsgemäßen Verfahren erfolgt das Zuführen des Gases zu der Flüssigkeit in einem geschlossenen Überdrucksystem, wodurch verhindert ist, daß zugeführtes Gas aus der Flüssigkeit frei in die Umgebung austreten kann. Das Gas, das nicht die Flüssigkeit anreichert, verbleibt innerhalb des Überdrucksystems und kann für wenigstens einen weiteren Anreicherungsvorgang verwendet werden. Durch das Zuführen des Gases zu der Flüssigkeit unter einem Druck wird bereits eine Anreicherung von Gas in oder an die Flüssigkeit erreicht. Diese Anreicherung erfolgt aufgrund des hohen Druckes, insbesondere während des Zuführens des Gases. Eine enge Verbindung von Gas und Flüssigkeit, beispielsweise von Sauerstoff und Wasser, wird ausgebildet. Diese Zuführung von Gas zu der Flüssigkeit bewirkt aber noch keinen hohen Anteil, d. h. keine hohe Konzentration, von freiem Gas in der Flüssigkeit.

Eine Erhöhung der Konzentration von freiem Gas in der Flüssigkeit wird durch den Verfahrensschritt erreicht, daß die Flüssigkeit, der unter hohem Druck Gas zugeführt wurde, aus dem Überdrucksystem abgeführt wird und während ihres Abführens expandiert wird. Eine Expansion der mit Gas angereicherten Flüssigkeit wird dadurch erreicht, daß sie aus dem Überdrucksystem in eine Umgebung geführt wird, in der der Druck geringer ist. Aufgrund des geringeren Druckes kann die Flüssigkeit expandieren. Es erfolgt eine Entspannung der Flüssigkeit, wobei das in dem Überdrucksystem noch an die Flüssigkeit gebundene Gas während des Entspannens freigesetzt wird. Dadurch erfolgt eine Erhöhung der Konzentration von freiem Gas in der Flüssigkeit.

Die abgeführte Flüssigkeit wird in einem einen Auslaß aufweisenden Drucksystem expandiert, wobei der Druck in diesem Drucksystem zu Beginn der Expansion gleich dem Druck in dem geschlossenen Überdrucksystem ist und anschließend in kleinen Schritten verringert wird. Die Flüssigkeit wird sehr langsam und schrittweise expandiert. Dazu wird die Flüssigkeit zunächst in das einen Auslaß aufweisende Drucksystem überführt. Während dieser Überführung und vor Beginn der Expansion ist der Druck in diesem Drucksystem gleich dem Druck in dem geschlossenen Überdrucksystem. Während des Überführens der Flüssigkeit findet somit noch keine Expansion der Flüssigkeit statt. Diese Expansion erfolgt erst anschließend ausschließlich in dem den Auslaß aufweisenden Drucksystem. Dieses Drucksystem ist dann hinsichtlich seiner Druckverhältnisse von dem geschlossenen Überdrucksystem abgekoppelt. Der Druck in diesem Drucksystem wird langsam verringert. Dabei expandiert die Flüssigkeit langsam. Bei dieser langsamen Expansion tritt das Freiwerden von Gas in Form von kleinen Bläschen innerhalb der Flüssigkeit nicht im gleichen Maße wie z.B. bei einer schlagartigen Expansion auf. Das Gas bleibt stärker an die Flüssigkeit gebunden. Diese stärkere Bindung hat den Vorteil, daß das Gas länger in der Flüssigkeit verbleibt. Dies auch insbesondere dann, wenn die Flüssigkeit in einen Behälter, wie in eine Flasche, abgefüllt wird und in diesem Behälter eine längere Zeit, z. B. über Wochen, gelagert wird. Ein Freiwerden von Gas tritt im wesentlichen auch dann nicht ein, wenn die Flüssigkeit z. B. in dieser Flasche transportiert wird und dabei Erschütterungen ausgesetzt ist.

Erfindungsgemäß ist vorgesehen, daß durch das Drucksystem wenigstens zwei Druckabbaubehälter bereitgestellt werden, in welchen wechselseitig die abgeführte Flüssigkeit expandiert wird, wobei in den Druckabbaubehältern angeordnetes Restgas wechselseitig in den Druckabbaubehälter geführt wird, in welchem gegenwärtig keine Expansion der zugeführten Flüssigkeit erfolgt.

Das Restgas wird somit aus einem Druckabbaubehälter aus diesem heraus abgeführt und in den zweiten Druckabbaubehälter eingeführt. Während der Abführung des Restgases sinkt der Druck im ersten Druckabbaubehälter, wobei das Restgas langsam, schrittweise abgeführt wird. Nach der Abführung des Gases und der dabei eintretenden Druckreduzierung kann aus dem Druckabbaubehälter mit der expansierten Flüssigkeit Flüssigkeit herausgeführt werden. Während dieses Abführens der Flüssigkeit wird sogleich der Druckabbaubehälter, in den das Gas eingeführt wurde, mit Flüssigkeit aus dem Vorratsbehälter gefüllt. Zum Druckabbau in diesem Behälter wird das Gas wieder zurück in den Druckabbaubehälter geleitet, in dem gegenwärtig keine Expansion erfolgt.

Dieses wechselseitige Auffüllen der Druckabbaubehälter kann fortlaufend alternierend erfolgen. Im Ergebnis ist vorteilhaft eine kontinuierliche Entnahme von Flüssigkeit am Auslaß ermöglicht. Bei einer entsprechenden Erhöhung des Volumens des Vorratsbehälters können weitere Druckabbaubehälter vorgesehen sein.

Der Druck in den Druckabbaubehältern des den Auslaß aufweisenden Drucksystem wird beispielsweise auf 1 bar verringert. Bei einer Verringerung des Druckes auf diesen Wert ist die langsame Expansion der Flüssigkeit bei einem geringen Freiwerden des in ihr gelösten Gases gewährleistet. Der Druck in dem Drucksystem kann soweit verringert werden, daß er dem Außendruck außerhalb dieses Drucksystems entspricht. Ein Druckabbaubehälter des Drucksystems ist dann drucklos, unter statischen Verhältnissen kann die Flüssigkeit aus dem Drucksystem herausgeführt und z. B. in Flaschen abgefüllt werden. Ist das Druckabbaubehälter vollständig entleert, so wird er wieder unter den Druck gesetzt, der in dem geschlossenen Überdrucksystem herrscht. Nachfolgend kann erneut Flüssigkeit eingefüllt werden, bevor dann wieder eine schrittweise Absenkung des Druckes in dem Druckabbaubehälter erfolgt. Das Drucksystem bildet somit eine Druckschleuse aus, in der jeweils ein Teil des Flüssigkeitsvolumens aus dem geschlossenen Überdrucksystem in andere Druckverhältnisse überführt wird.

Die vorrichtungsseitige Lösung der Aufgabe ist dadurch gekennzeichnet, daß der Vorratsbehälter und der Behälter für das Gas mit zwei Druckabbaubehältern flüssigkeitsbzw. gasleitend verbunden sind, wobei beide Druckabbaubehälter mit einer absperrbaren Gasausgleichsleitung miteinander verbunden sind und jeweils mit einem Auslaß flüssigkeitsleitend verbunden sind.

Aus dem Vorratsbehälter und aus dem Behälter für das Gas können abwechselnd in den einen oder in den anderen Druckabbaubehälter Gas und Flüssigkeit zugeführt werden. Insgesamt kann das verarbeitbare Flüssigkeitsvolumen gegenüber einem System mit einem Druckabbaubehälter signifikant erhöht werden. Neben zwei Druckabbaubehältern können weitere Druckabbaubehälter vorgesehen sein, wenn der Vorratsbehälter für die mit Gas angereicherte Flüssigkeit entsprechend dimensioniert ist. Nachdem einer der beiden Vorratsbehälter durch Einführen von Gas in den gleichen Druckzustand wie das geschlossene Überdrucksystem gebracht wurde und nachfolgend die Flüssigkeit eingefüllt wurde, kann bei einem Öffnen eines in die Gasausgleichsleitung integrierten Druckablaßventiles noch in diesem Druckabbaubehälter vorhandenes und aufgrund des Überdruckes entweichendes Gas über die Gasausgleichsleitung in den anderen Druckabbaubehälter eingeleitet werden. Dadurch ist vorteilhaft keine Zuführung von neuem Gas aus dem Behälter für das Gas erforderlich. Vielmehr kann bereits in einem Druckabbaubehälter verwendetes Gas in dem anderen Druckabbaubehälter verwendet werden, wobei das Gas jeweils hin und her gefördert werden kann.

Eine erste Weiterbildung der vorrichtungsgemäßen Ausgestaltung sieht vor, daß die Druckabbaubehälter jeweils in ihren unteren Bereich mit dem Vorratsbehälter für die mit Gas angereicherte Flüssigkeit flüssigkeitsleitend verbunden ist, wobei der Flüssigkeitsstand im Vorratsbehälter höher als die Druckabbaubehälter angeordnet ist, und daß die Druckabbaubehälter jeweils in ihrem oberen Bereich mit dem Behälter für das Gas gasleitend verbunden ist. Diese Ankopplung der Druckabbaubehälter an den Vorratsbehälter und an den Behälter für das Gas ermöglicht vorteilhaft eine einfache Befüllung der Druckabbaubehälter mit der Flüssigkeit aus dem Vorratsbehälter. Insbesondere ist bei dieser Befüllung gewährleistet, daß die Flüssigkeit während ihrer Einleitung in die Druckabbaubehälter keinem Druckgefälle unterworfen ist, der ein Freisetzen des Gases verursachen würde. In den Leitungsverbindungen zwischen den Druckabbaubehältern, dem Vorratsbehälter und dem Behälter für das Gas sind entsprechende Absperrorgane angeordnet, die beispielsweise als Schieber ausgebildet sind.

Nach einer Weiterbildung ist im oberen Bereich der Druckabbaubehälter jeweils ein Druckablaßventil angeordnet. Über dieses Druckablaßventil kann nach der Befüllung des Druckabbaubehälters mit der Flüssigkeit der Überdruck im Druckabbaubehälter abgebaut werden. Verfahrensgemäß ist vorgesehen, den Druck langsam, schrittweise abzubauen. Vorrichtungsseitig ist dafür ein entsprechendes Druckablaßventil vorgesehen, zudem ist dem Druckabbaubehälter ein Manometer zur Überwachung des Druckabbaus zugeordnet.

Nach einer Weiterbildung ist vorgesehen, daß im Vorratsbehälter für die mit Gas angereicherte Flüssigkeit eine Flüssigkeitsstandniveau-Regeleinrichtung vorgesehen. Mit dieser Regeleinrichtung kann vorteilhaft gewährleistet werden, daß sich im Vorratsbehälter immer ein ausreichendes Flüssigkeitsvolumen befindet, so daß insbesondere eine fortlaufende Befüllung von einem oder mehreren Druckabbaubehältern mit Flüssigkeit gewährleistet ist. Die erfindungsgemäße Vorrichtung kann vorzugsweise im Dauerbetrieb gefahren werden, wobei fortlaufend eine Entnahme von mit Gas angereicherter Flüssigkeit aus einem oder mehreren Druckabbaubehältern möglich ist.

Zur Vereinfachung der Vorrichtung ist vorgesehen, daß die Behälter für Flüssigkeit und Gas und der Vorratsbehälter für mit Gas angereicherte Flüssigkeit ein und derselbe Vorratsbehälter sind, in dessen unterem Bereich die Flüssigkeit bevorratet ist, und in dessen oberem Bereich das Gas mit einstellbarem Druck eingeführt ist. Der Vorratsbehälter ist beispielsweise als Tank ausgebildet, der zunächst drucklos zu etwa 2/3 mit der Flüssigkeit gefüllt ist. In das obere Drittel des Tanks wird das Gas, mit dem die Flüssigkeit angereichert werden soll, eingeführt. Das Gas wird mit einem hohen Druck eingeführt, wodurch insgesamt der Tank und die angrenzenden Bauteile als geschlossenes Überdrucksystem ausgebildet werden. Als Flüssigkeit wird beispielsweise Wasser verwendet und als Gas Sauerstoff, das aus einer handelsüblichen Hochdruck-Sauerstoffflasche zugeführt wird. Über einen an der Sauerstoffflasche vorgesehenen Druckminderer können die Druckverhältnisse in dem geschlossenen Überdrucksystem eingestellt werden.

Die Vermischung der Flüssigkeit mit dem Gas kann beispielsweise durch eine im Behälter angeordnete Zuführeinrichtung erfolgen. Vorzugsweise ist jedoch vorgesehen, daß der Vorratsbehälter über ein geschlossenes Leitungssystem mit der Zuführeinrichtung flüssigkeits- bzw. gasleitend verbunden ist. Über diese Leitungen werden die Flüssigkeit bzw. das Gas der extern angeordneten Zuführeinrichtung zugeführt, in der sie miteinander vermischt werden, wodurch es zu der gebundenen Anreicherung der Flüssigkeit mit dem Gas kommt. Die Zuführeinrichtung ist beispielsweise eine Kreiselpumpe mit einem Hochdruckinjektor, welche mit dem Vorratsbehälter über ein Kreislauf-Leitungssystem verbunden ist. Eine Kreiselpumpe mit einem Hochdruckinjektor ist in der Lage, neben einer Flüssigkeit auch ein Gas bzw. ein Gemisch aus Flüssigkeit und Gas anzusaugen und weiterzufördern. Durch die Kreiselpumpe werden Flüssigkeit und Gas angesaugt und dabei durch einen schnellen Lauf dieser Kreiselpumpe miteinander verwirbelt. Dadurch erfolgt die Anreicherung der Flüssigkeit mit dem Gas, wobei jedoch eine gebundene Anreicherung, d. h. eine enge Bindung des Gases an die Flüssigkeit, gewonnen ist.

Das Kreislauf-Leitungssystem umfaßt auf der Ansaugseite der Kreiselpumpe nach einer Weiterbildung der Erfindung eine im oberen Bereich des Vorratsbehälters aus diesem austretende Gasleitung und eine im unteren Bereich des Vorratsbehälters aus diesem austretende Flüssigkeitsleitung, welche unmittelbar vor der Kreiselpumpe zu einer gemeinsamen Leitung zusammengeführt sind. Die Gasleitung und die Flüssigkeitsleitung sind so an den Vorratsbehälter angesetzt, daß sie aus den verschiedenen Bereichen des Vorratsbehälters Gas bzw. Flüssigkeit entnehmen können. Durch das Zusammenführen dieser Leitungen ist erreicht, daß der Kreiselpumpe ein Flüssigkeits-Gas-Gemisch zugeführt wird. Dabei wird beispielsweise durch das Ansaugen der Flüssigkeit durch die Kreiselpumpe zugleich ein Unterdruck in der Gasleitung ausgebildet, wodurch ein gleichzeitiges Ansaugen des Gases durch die Kreiselpumpe erreicht ist.

Auf der Abströmungsseite der Kreiselpumpe kann in einer Leitung zwischen der als Kreiselpumpe ausgebildeten Zuführeinrichtung und dem Vorratsbehälter eine Verwirbelungseinrichtung angeordnet sein. Mit einer derartigen Verwirbelungseinrichtung ist vorteilhaft eine weitere Vermischung von Flüssigkeit und Gas erreichbar. Als Verwirbelungseinrichtung ist beispielsweise eine Zyklon-Wirbelkammer verwendbar, in welcher zusätzlich ein Netz, ein Gitter oder dergleichen installiert sein kann. Beim Hindurchtreten der bereits mit dem Gas angereicherten Flüssigkeit wird die Flüssigkeit verwirbelt, wodurch eine weitere Vermischung von Flüssigkeit und Gas auftritt, mit dem Vorteil, daß die Anreicherung des Gases in der Flüssigkeit erhöht wird. Die vorgesehene Verwirbelungseinrichtung stellt zugleich eine Druckminderungseinrichtung dar. Während auf der Ansaugseite der Zuführeinrichtung ein Unterdruck existiert, der bewirkt, daß die Medien Gas und Flüssigkeit in die Zuführeinrichtung angesaugt werden, ist auf der anderen Seite der Zuführeinrichtung ein Überdruck ausgebildet. Dieser Überdruck kann in der Verwirbelungseinrichtung abgebaut werden. Dies ist beispielsweise dadurch erreicht, daß der Querschnitt der Leitung zwischen Zuführeinrichtung und Vorratsbehälter in der Verwirbelungseinrichtung aufgeweitet ist.

Die nach dem Verfahren angereicherte Flüssigkeit ist durch eine Konzentration von freiem Gas größer als 60 mg/l gekennzeichnet. Insbesondere nach dem Verfahren mit Sauerstoff angereichertes Wasser weist eine Konzentration von freiem Sauerstoff von größer als 200 mg/l auf.

Ausführungsbeispiele der Erfindung, aus denen sich weitere erfinderische Merkmale ergeben, sind in der Zeichnung dargestellt. Es zeigen:
- Fig. 1:: eine Vorrichtung zur Anreicherung einer Flüssigkeit mit einem Gas und
- Fig. 2:: eine Teilansicht der Vorrichtung gemäß Fig. 1.

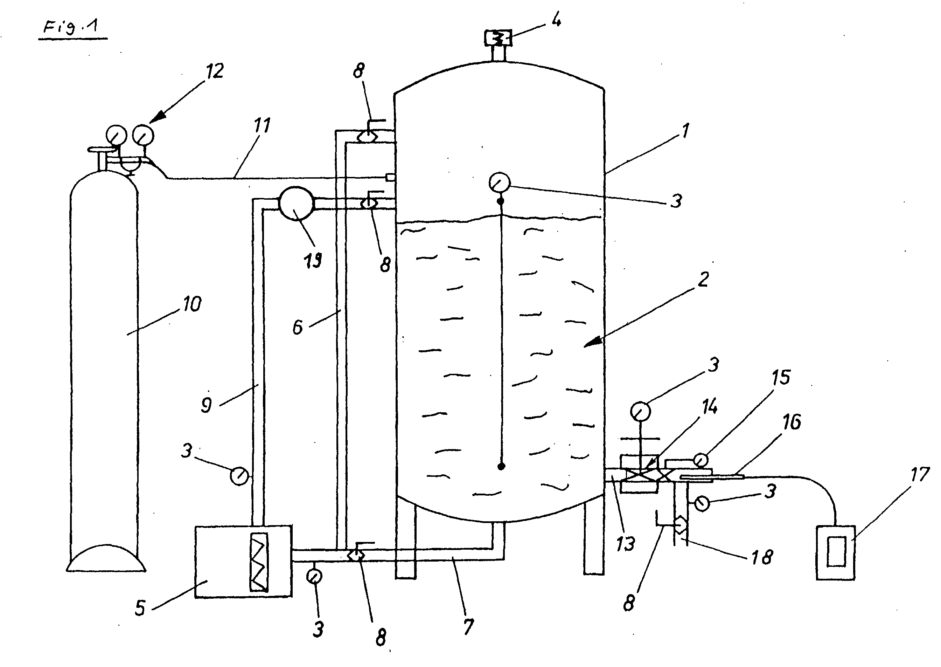

Die in Fig. 1 dargestellte Vorrichtung umfaßt einen Vorratsbehälter 1 für eine mit Gas angereicherte Flüssigkeit 2. Der Vorratsbehälter 1 ist mit einem Manometer 3 zur Anzeige des in dem Vorratsbehälter 1 herrschenden Druckes sowie mit einem Überdruckventil 4 ausgestattet.

Der Vorratsbehälter 1 ist über ein geschlossenes Leitungssystem mit einer Zuführeinrichtung 5 zum Zuführen eines Gases zu einer Flüssigkeit leitend verbunden. Die Zuführeinrichtung 5 ist als Kreiselpumpe ausgebildet. Auf der Ansaugseite der Kreiselpumpe führt von dem Vorratsbehälter 1 einerseits eine aus dem oberen Bereich des Vorratsbehälters 1 austretende Gasleitung 6 sowie andererseits eine im unteren Bereich des Vorratsbehälters 1 aus diesem austretende Flüssigkeitsleitung 7 zur Zuführeinrichtung 5. Die Gasleitung 6 und die Flüssigkeitsleitung 7 sind unmittelbar in Flußrichtung vor der Zuführeinrichtung 5 zu einer gemeinsamen Leitung zusammengeführt, wobei in der Flüssigkeitsleitung 7 vor Zusammenführen mit der Gasleitung 6 ein betätigbarer Schieber 8 angeordnet ist. Aus der Zuführeinrichtung 5 führt eine Leitung 9 für ein Gas-Flüssigkeits-Gemisch zum Vorratsbehälter 1 zurück, so daß die Zuführeinrichtung 5 in einem geschlossenen Kreislauf angeordnet ist. Im Verlauf der Leitung 9 ist eine Verwirbelungseinrichtung 19 angeordnet. Diese Verwirbelungseinrichtung 19 kann beispielsweise eine Zyklon-Wirbelkammer sein. In der Leitung 9 sowie in der Gasleitung 6 sind gleichfalls Schieber 8 angeordnet.

Im oberen Bereich des Vorratsbehälters 1 wird das Gas, welches der Flüssigkeit zugeführt wird, bevorratet. In den Vorratsbehälter 1 ist das Gas aus einer externen Gasflasche 10 über eine Leitung 11 einführbar. Die Gasflasche 10 ist eine Hochdruck-Gasflasche, an ihrem Auslaß ist ein Druckminderer 12 in die Leitung 11 eingesetzt. Mit dem Druckminderer 12 kann der Druck des Gases im Vorratsbehälter 1 und somit das aus Vorratsbehälter 1, der Zuführeinrichtung 5 sowie den Leitungen 6, 7 und 9 gebildete geschlossene System unter einen einstellbaren Überdruck gesetzt werden. Beispielsweise wird ein Druck von 1,5 bis 6 bar eingestellt.

An den Vorratsbehälter 1 ist in seinem unteren Bereich eine aus ihm abführende Leitung 13 für mit Gas angereicherte Flüssigkeit angesetzt.

Die abführende Leitung 13 führt in Fig. 1 zu einer Kammer, in der ein geringerer Druck als im Vorratsbehälter 1 herrscht. Diese Kammer wird durch einen schematisch dargestellten Hohlkugelhahn 14 ausgebildet, der in die abführende Leitung 13 eingesetzt ist. Dem Hohlkugelhahn 14 ist ein Manometer 3 zugeordnet, welches den Druck im Inneren des Hohlkugelhahnes 14 mißt. In der abführenden Leitung 13 sind in Fließrichtung nach dem Hohlkugelhahn 14 weitere Bauelemente angeordnet. Zum einen ist ein Fließgeschwindigkeitsmeßgerät 15 vorgesehen, zum anderen ist in der abführenden Leitung 13 auch der Fühler 16 eines Gasmeßgerätes 17 befindlich. Die abführende Leitung 13 mündet schließlich in einem Auslaß 18, dem ein Manometer 3 und ein Schieber 8 zugeordnet sind.

Mit der in Fig. 1 dargestellten Vorrichtung ist das erfindungsgemäße Verfahren zur Anreicherung einer Flüssigkeit mit einem Gas teilweise durchführbar. Dazu werden zunächst die in dem Vorratsbehälter 1 bevorrateten Flüssigkeit und Gas über die Leitungen 6 und 7 der Zuführeinrichtung 5 zugeführt, in der eine Vermischung dieser beiden Medien erfolgt. Dabei findet eine Anreicherung der Flüssigkeit mit dem Gas statt, in der Weise, daß das Gas an die Flüssigkeit gebunden wird. Eine Konzentration von freiem Gas, d. h. nur physikalisch gebundenem Gas, in der Flüssigkeit ist noch gering. Eine weitere Vermischung von Flüssigkeit und Gas erfolgt in der Verwirbelungseinrichtung 19 im Verlauf der Leitung 9. Die Vermischung von Flüssigkeit und Gas erfolgt dabei in einem geschlossenen Überdrucksystem, das aus dem Vorratsbehälter 1 der Zuführeinrichtung 5 und den Leitungen 6, 7, 9 ausgebildet ist.

Aus dem Vorratsbehälter 1 ist mit gebundenem Gas angereicherte Flüssigkeit 2 über die abführende Leitung 13 abführbar.

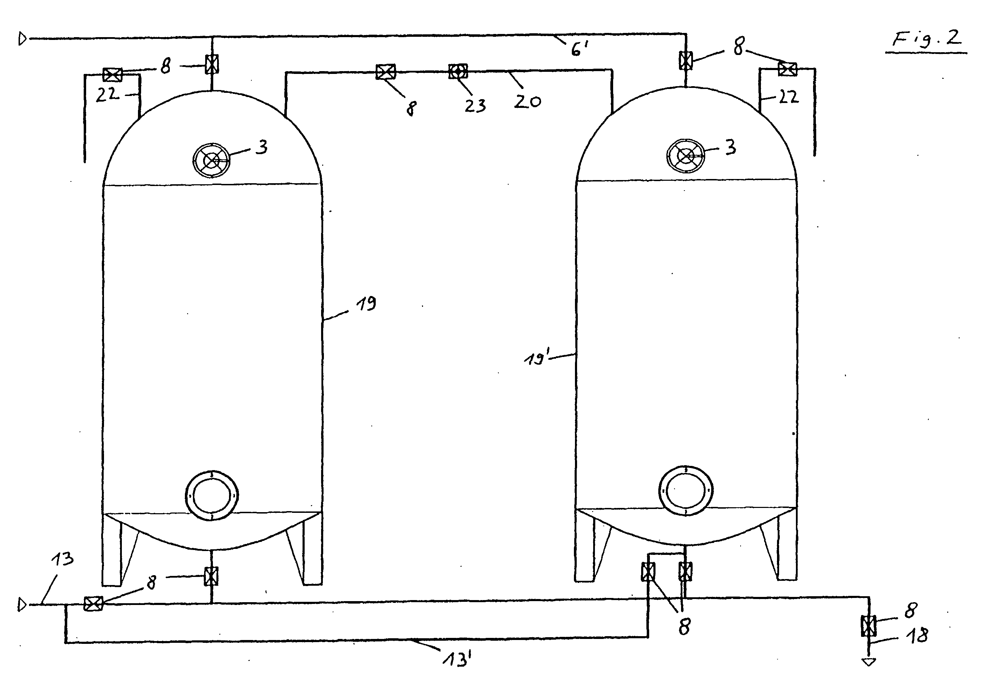

Fig. 2 zeigt einen Teil der Vorrichtung zur Durchführung des erfindungsgemäßen Verfahrens, der zwei dem Vorratsbehälter 1 in Fig. 1 nachgeordnete Druckabbaubehälter 19, 19' umfaßt.

Die Druckabbaubehälter 19, 19' sind mit dem Vorratsbehälter 1 über die abführende Leitung 13 verbunden, welche jeweils im unteren Bereich jedes Druckabbaubehälters 19, 19' in diesen einmündet. Eine weitere Verbindung zwischen den Druckabbaubehältern 19, 19' und dem Vorratsbehälter 1 wird durch eine Gasleitung 6' hergestellt, welche die jeweils oberen Bereiche der Druckabbaubehälter 19, 19' und des Vorratsbehälters 1 miteinander gasleitend verbindet. Sowohl in der abführenden Leitung 13 als auch in der Gasleitung 6' sind Schieber 8 als Absperrorgane eingesetzt. Die abführende Leitung 13 mündet in einen Auslaß 18. Sie weist einen Abzweig 13' auf, der zu dem zweiten Druckabbaubehälter 19' führt. Über diesen Abzweig 13' kann eine flüssigkeitsleitende Verbindung zwischen dem zweiten Druckabbaubehälter 19' und dem Vorratsbehälter 1 hergestellt werden, auch dann, wenn die flüssigkeitsleitende Verbindung zwischen dem ersten Druckabbaubehälter 19 und dem Vorratsbehälter 1 mittels eines Schiebers 8 unterbrochen ist.

Die beiden Druckabbaubehälter 19, 19' sind über eine Gasausgleichsleitung 20 miteinander gasleitend verbunden. Die Gasausgleichsleitung 20 mündet jeweils im oberen Bereich in die Druckabbaubehälter 19, 19' ein. In der Gasausgleichsleitung 20 sind ein Schieber 8 und eine Gasdurchflußanzeige 23 angeordnet. Zudem weist jeder Druckabbaubehälter 19, 19' in diesem Bereich ein Druckablaßventil 22 auf.

Die beiden Druckabbaubehälter 19, 19' sind räumlich unterhalb der Höhe des Flüssigkeitsstandes im Vorratsbehälter 1 angeordnet.

Mit der in Fig. 2 dargestellten Vorrichtung ist das erfindungsgemäße Verfahren durchführbar. Bei diesem soll verhindert werden, daß in der Flüssigkeit Gas freigesetzt wird. Das in der Flüssigkeit gelöste Gas soll nicht während eines Entspannens freigesetzt werden. Es soll mit der Flüssigkeit verbunden bleiben, so daß diese Flüssigkeit insbesondere bei einem Transport nach einem Abfüllen in Behälter stabil ist. Ein zwangsweise stattfindendes Ausgasen bzw. Freisetzen des Gases wird verhindert.

Das mit dieser Vorrichtung durchgeführte Verfahren läuft wie folgt ab:
Der Vorratsbehälter 1 steht als Teil des ausgebildeten geschlossenen Überdrucksystems unter einem bestimmten Überdruck. Über die Gasleitung 6' wird bei geöffnetem Schieber 8 der erste Druckabbaubehälter 19 mit Gas gefüllt und somit unter den gleichen Überdruck gesetzt. Die Druckverhältnisse sind über das Manometer 3 ablesbar. Nach Herstellung dieses Druckes wird der Schieber 8 in der Gasleitung 6' wieder geschlossen. Nachfolgend werden die Schieber 8 in der abführenden Leitung 13 geöffnet. Aufgrund des hydrostatischen Druckes und aufgrund der Anordnung des Druckabbaubehälters 19 unterhalb der Höhe des Flüssigkeitsstandes im Vorratsbehälter 1 strömt Flüssigkeit 2 durch die abführende Leitung 13 in den ersten Druckabbaubehälter 19. Die Flüssigkeit strömt in diesen Druckabbaubehälter 19, bis ein gleiches Flüssigkeitsniveau zwischen Vorratsbehälter 1 und
Druckabbaubehälter 19 hergestellt ist, wobei im Druckabbaubehälter 19 vorzugsweise ein Gasrest verbleibt. Nachfolgend werden die Schieber 8 in der abführenden Leitung 13 wieder geschlossen. Über die Gasausgleichsleitung 20 wird bei geöffnetem Schieber 8 das noch im Druckabbaubehälter 19 befindliche Gas aus diesem abgeführt und in den zweiten Druckabbaubehälter 19' eingeführt. Während der Abführung des Gases sinkt der Druck im ersten Druckabbaubehälter 19. Das Gas wird langsam, schrittweise abgeführt, so daß die Druckreduzierung entsprechend langsam erfolgt. Ein schlagartiges Entspannen der Flüssigkeit im Druckabbaubehälter 19 wird verhindert, vielmehr folgt ein langsames Entspannen der Flüssigkeit. Das Gas entweicht aus dem Druckabbaubehälter 19, bis in diesem der gewünschte niedrige Druck hergestellt ist. Anschließend wird der Schieber 8 in der Gasausgleichsleitung 20 geschlossen und es werden die in der abführenden Leitung 13 zwischen dem Druckabbaubehälter 19 und dem Auslaß 18 vorhandenen Schieber 8 geöffnet. Die Flüssigkeit kann nun über den Auslaß 18 abgeführt werden und beispielsweise in Flaschen eingefüllt werden.

Während dieses Abführens der Flüssigkeit aus dem Druckabbaubehälter 19 wird zugleich der Druckabbaubehälter 19' mit Flüssigkeit aus dem Vorratsbehälter 1 in entsprechender Weise befüllt. Zuvor wurde dieser Druckabbaubehälter 19' mit dem Gas aus dem Druckabbaubehälter 19 und eventuell zusätzlichem Gas über die Gasleitung 6' unter den hohen Druck des Vorratsbehälters 1 gesetzt. Über die den Abzweig 13' wird nachfolgend Flüssigkeit in den Druckabbaubehälter 19' eingeleitet. Zum Druckabbau in diesem Druckabbaubehälter 19' wird wieder die Gasausgleichsleitung 20 geöffnet, woraufhin im Druckabbaubehälter 19' verbliebenes Gas in den ersten Druckabbaubehälter 19 eingeleitet werden kann.

Dieses wechselseitige Auffüllen der Durckabbaubehälter 19, 19' kann fortlaufend alternierend erfolgen. Im Ergebnis ist eine kontinuierliche Entnahme von Flüssigkeit am Auslaß 18 ermöglicht. Über eine nicht weiter dargestellte Flüssigkeitsstandsniveau-Regeleinrichtung im Vorratsbehälter 1 ist dabei gewährleistet, daß im Vorratsbehälter 1 immer ein zur Herstellung der erforderlichen hydrostatischen Druckverhältnisse erforderlicher Flüssigkeitsstand vorhanden ist.

Bei einer entsprechenden Erhöhung des Volumens des Vorratsbehälters 1 können weitere Druckabbaubehälter 19, 19' vorgesehen sein.

## Patentansprüche

1. Verfahren zum Anreichern einer Flüssigkeit mit einem Gas, vorzugsweise zum Anreichern von Wasser mit Sauerstoff, bei dem der Flüssigkeit das Gas in einem geschlossenen Überdrucksystem zugeführt wird, die Flüssigkeit nach Zuführen des Gases aus dem geschlossenen Überdrucksystem in ein einen Auslaß (18) aufweisendes Drucksystem abgeführt wird und in diesem expandiert wird, wobei der Druck in diesem Drucksystem zu Beginn der Expansion gleich dem Druck im geschlossenen Überdrucksystem ist und anschließend in kleinen Schritten verringert wird,
**dadurch gekennzeichnet,**
**daß** durch das Drucksystem wenigstens zwei Druckabbaubehälter (19, 19') bereitgestellt werden, in welchen wechselseitig die abgeführte Flüssigkeit expandiert wird, wobei in den Druckabbaubehältern (19, 19') angeordnetes Restgas wechselseitig in den Druckabbaubehälter (19, 19') geführt wird, in welchem gegenwärtig keine Expansion der zugeführten Flüssigkeit erfolgt.

2. Verfahren nach Anspruch 1, **dadurch gekennzeichnet, daß** der Druck in dem Drucksystem auf 1 bar verringert wird.

3. Verfahren nach Anspruch 2, **dadurch gekennzeichnet, daß** der Druck in dem Drucksystem auf den Außendruck verringert wird.

4. Vorrichtung zum Durchführen des Verfahrens nach einem der Ansprüche 1 bis 3 mit einem Behälter für eine mit einem Gas anzureichernde Flüssigkeit und mit einem Behälter für das zuzuführende Gas, wobei die Behälter für die Flüssigkeit und für das Gas mit einer Zuführeinrichtung (5) für das Zuführen des Gases zu der Flüssigkeit flüssigkeits- bzw. gasleitend verbunden sind, wobei mit der Zuführeinrichtung (5) ein Vorratsbehälter (1) für mit Gas angereicherte Flüssigkeit (2) flüssigkeitsleitend verbunden ist, wobei die Behälter für Flüssigkeit und Gas, die Zuführeinrichtung (5) und der Vorratsbehälter (1) für die mit Gas angereicherte Flüssigkeit (2) ein geschlossenes Überdrucksystem ausbilden und wobei der Vorratsbehälter (1) für die mit Gas angereicherte Flüssigkeit (2) mit wenigstens einem Druckabbaubehälter (19, 19') mit wählbar einstellbarem Innendruck absperrbar flüssigkeitsleitend verbunden ist,
**dadurch gekennzeichnet,**
**daß** der Vorratsbehälter (1) und der Behälter für das Gas mit zwei Druckabbaubehältern (19, 19') flüssigkeits- bzw. gasleitend verbunden sind, wobei beide Druckabbaubehälter (19, 19') mit einer absperrbaren Gasausgleichsleitung (20) miteinander verbunden sind und jeweils mit einem Auslaß (18) flüssigkeitsleitend verbunden sind.

5. Vorrichtung nach Anspruch 4, **dadurch gekennzeichnet, daß** die Druckabbaubehälter (19, 19') jeweils in ihrem unteren Bereich mit dem Vorratsbehälter (1) für die mit Gas angereicherte Flüssigkeit flüssigkeitsleitend verbunden sind, wobei der Flüssigkeitsstand im Vorratsbehälter (1) höher als die Druckabbaubehälter (19, 19') angeordnet ist, und daß die Druckabbaubehälter (19, 19') jeweils in ihrem oberen Bereich mit dem Behälter für das Gas gasleitend verbunden ist.

6. Vorrichtung nach Anspruch 5, **dadurch gekennzeichnet, daß** in den Leitungsverbindungen zwischen den Druckabbaubehälter (19, 19') und dem Vorratsbehälter (1) bzw. dem Behälter für das Gas Absperrorgane angeordnet sind.

7. Vorrichtung nach einem der Ansprüche 4 bis 6, **dadurch gekennzeichnet, daß** im oberen Bereich der Druckabbaubehälter (19, 19') jeweils ein Druckablaßventil (22) angeordnet ist.

8. Vorrichtung nach einem der Ansprüche 4 bis 7, **dadurch gekennzeichnet, daß** jedem Druckabbaubehälter (19, 19') ein Manometer (3) zugeordnet ist.

9. Vorrichtung nach einem der Ansprüche 4 bis 8, **dadurch gekennzeichnet, daß** im Vorratsbehälter (1) eine Flüssigkeitsstandniveau-Regeleinrichtung vorgesehen ist.

10. Vorrichtung nach einem der Ansprüche 4 bis 9, **dadurch gekennzeichnet, daß** die Behälter für Flüssigkeit und Gas und der Vorratsbehälter (1) für mit Gas angereicherte Flüssigkeit (2) ein und derselbe Vorratsbehälter sind, in dessen unterem Bereich die Flüssigkeit bevorratet ist und in dessen oberem Bereich das Gas mit einstellbarem Druck eingeführt ist.

11. Vorrichtung nach Anspruch 10, **dadurch gekennzeichnet, daß** der Vorratsbehälter (1) über ein geschlossenes Leitungssystem (6, 7, 9) mit der Zuführungseinrichtung (5) flüssigkeits- bzw. gasleitend verbunden ist.

12. Vorrichtung nach Anspruch 11, **dadurch gekennzeichnet, daß** die Zuführeinrichtung (5) eine Kreiselpumpe mit einem Hochdruckinjektor ist, welche mit dem Vorratsbehälter (1) über das als Kreislauf ausgebildete Leitungssystem (6, 7, 9) verbunden ist.

13. Vorrichtung nach Anspruch 12, **dadurch gekennzeichnet, daß** das Leitungssystem (6, 7, 9) auf der Ansaugseite der Kreiselpumpe eine im oberen Bereich des Vorratsbehälters (1) aus diesem austretende Gasleitung (6) und eine im unteren Bereich des Vorratsbehälters (1) aus diesem austretende Flüssigkeitsleitung (7) umfaßt, welche unmittelbar vor der Kreiselpumpe zu einer gemeinsamen Leitung zusammengeführt sind.

14. Vorrichtung nach Anspruch 12 oder 13, **dadurch gekennzeichnet, daß** im Leitungssystem (6, 7, 9) zwischen der Zuführeinrichtung (5) und dem Vorratsbehälter (1) eine Verwirbelungseinrichtung (19) angeordnet ist.

## Claims

1. A method of enriching a liquid with a gas, preferably enriching water with oxygen, in which gas is fed into the liquid in a closed excess pressure system; after supplying the gas, the liquid is removed from the closed excess pressure system into a pressure system having an outlet (18) and is expanded there; the pressure in this pressure system being equal to the pressure in the closed excess pressure system at the beginning of expansion and then being reduced in small increments,
**characterized in that**
at least two pressure reduction containers (19, 19') are made available by the pressure system, the liquid that is removed is expanded alternately in these two containers, whereby residual gas in the pressure reduction containers (19, 19') is alternately carried into the pressure reduction container (19, 19') in which no expansion of the liquid supplied is currently taking place.

2. The method according to Claim 1,
**characterized in that**
the pressure in the pressure system is reduced to 1 bar.

3. The method according to Claim 2,
**characterized in that**
the pressure in the pressure system is reduced to the outside pressure.

4. A device for carrying out the method according to one of Claims 1 through 3, with a container for a liquid to be enriched with a gas and with a container for the gas to be supplied, whereby the containers for the liquid and for the gas are connected to a supply device (5) for supplying the gas to the liquid in a manner suitable to carry liquid and/or gas, whereby a storage container (1) for liquid (2) enriched with gas is connected to the supply device (5) in a manner suitable to carry liquid, whereby the containers for the liquid and the gas, the supply device (5) and the storage container (1) for the liquid (2) enriched with gas form a closed excess pressure system, and whereby the storage container (1) for the liquid (2) enriched with gas is connected to at least one pressure reduction container (19, 19') in a manner suitable to carry liquid and so that it can be cut off and with a selectably adjustable inside pressure,
**characterized in that**
the storage container (1) and the container for the gas are connected to two pressure reduction containers (19, 19') in a manner suitable to carry liquid or gas, whereby both pressure reduction containers (19, 19') are connected to one another with a gas equalization line (20) that can be cut off, and each is connected to an outlet (18) in a manner suitable to carry liquid.

5. The device according to Claim 4,
**characterized in that**
the pressure reduction containers (19, 19') are each connected in their lower area to the storage container (1) for the liquid enriched with gas in a manner suitable for carrying liquid, whereby the liquid level in the storage container (1) is higher than the pressure reduction containers (19, 19'), and the pressure reduction containers (19, 19') are connected in their upper area to the container for the gas in a manner suitable to conduct gas.

6. The device according to Claim 5,
**characterized in that**
cutoff elements are provided in the line connections between the pressure reduction containers (19, 19') and the storage container (1) and the container for the gas.

7. The device according to one of Claims 4 through 6,
**characterized in that**
a pressure drain valve (22) is provided in the upper area of the pressure reduction containers (19, 19').

8. The device according to one of Claims 4 through 7,
**characterized in that**
a manometer (3) is provided for each pressure reduction containers (19, 19').

9. The device according to one of Claims 4 through 8,
**characterized in that**
a liquid level regulating device is provided in the storage container (1).

10. The device according to one of Claims 4 through 9,
**characterized in that**
the containers for liquid and gas and the storage container (1) for the liquid (2) enriched with gas are one and the same storage container, in whose lower area the liquid is stored and in whose upper area the gas is introduced with an adjustable pressure.

11. The device according to Claim 10,
**characterized in that**
the storage container (1) is connected to the supply device (5) over a closed line system (6, 7, 9) in a manner suitable for conducting gas and liquid.

12. The device according to Claim 11,
**characterized in that**
the supply device (5) is a centrifugal pump with a high-pressure injector, which is connected to the storage container (1) by the line system (6, 7, 9) which is designed as a circuit.

13. The device according to Claim 12,
**characterized in that**
the line system (6, 7, 9) includes a gas line (6) coming out of the storage container (1) in the upper area of the latter on the intake side of the centrifugal pump and a liquid line (7) coming out of the storage container (1) in the lower area of the latter, the gas line and the liquid line being joined to form a common line directly upstream from the centrifugal pump.

14. The device according to Claim 12 or 13,
**characterized in that**
a turbulence device (19) is arranged in the line system (6, 7, 9) between the supply device (5) and the storage container (1).

## Revendications

1. Procédé pour l'enrichissement d'un liquide avec un gaz, de préférence pour l'enrichissement d'eau avec de l'oxygène, dans lequel le gaz est apporté au liquide dans un système fermé à surpression, le liquide est évacué après apport du gaz hors du système fermé à surpression dans un système à pression présentant une évacuation (18) et est expansé dans celui-ci, la pression dans ce système à pression étant, au début de l'expansion, identique à la pression dans le système fermé à surpression et étant ensuite réduite par petites étapes,
**caractérisé en ce que**
le système à pression comporte au moins deux cuves de baisse de pression (19, 19'), dans lesquelles le liquide évacué est réciproquement expansé, le gaz résiduel se trouvant dans les cuves de baisse de pression (19, 19') étant acheminé réciproquement dans la cuve de baisse de pression (19, 19') où ne se produit pas à ce moment là d'expansion du liquide acheminé.

2. Procédé selon la revendication 1, **caractérisé en ce que** la pression dans le système à pression est réduite à 1 bar.

3. Procédé selon la revendication 2, **caractérisé en ce que** la pression dans le système à pression est réduite jusqu'à la pression extérieure.

4. Dispositif pour la réalisation du procédé selon une des revendications 1 à 3 avec une cuve pour un liquide à enrichir au gaz et avec une cuve pour le gaz à apporter, les cuves pour le liquide et le gaz étant reliées avec conduction de liquide ou de gaz par l'intermédiaire d'une installation d'acheminement (5) pour l'apport du gaz au liquide, une cuve de stockage (1) pour le liquide enrichi au gaz (2) étant reliée à l'installation d'acheminement (5) avec conduction de liquide, les cuves de liquide et de gaz, l'installation d'acheminement (5) et la cuve de stockage (1) pour le liquide enrichi au gaz (2) constituant un système fermé à surpression et la cuve de stockage (1) pour le liquide enrichi au gaz (2) étant reliée, avec conduction de liquide pouvant être stoppée, à au moins une cuve de baisse de pression (19, 19') d'une pression intérieure pouvant être réglée à volonté,
**caractérisé en ce que**
la cuve de stockage (1) et la cuve pour le gaz sont reliées avec conduction de liquide ou de gaz avec deux cuves de baisse de pression (19, 19'), les deux cuves de pression (19, 19') étant reliées l'une à l'autre avec une conduite d'équilibrage de gaz (20) pouvant être fermée et respectivement avec conduction de liquide à une évacuation (18).

5. Dispositif selon la revendication 4, **caractérisé en ce que** les cuves de baisse de pression (19, 19') sont respectivement reliées, dans leur partie inférieure, avec conduction de liquide à la cuve de stockage (1) pour le liquide enrichi au gaz, le niveau de liquide dans la cuve de stockage (1) étant fixé à un niveau plus élevé que dans les cuves de baisse de pression (19, 19') et que les cuves de baisse de pression (19, 19') sont respectivement reliées, dans leur partie supérieure, avec conduction de gaz à la cuve pour le gaz.

6. Dispositif selon la revendication 5, **caractérisé en ce que** des organes d'arrêt sont disposés dans les canalisations entre la cuve de baisse de pression (19, 19') et la cuve de stockage (1) ou la cuve pour le gaz.

7. Dispositif selon une des revendications 4 à 6, **caractérisé en ce que**, dans la partie supérieure de la cuve de baisse de pression (19, 19'), est disposée respectivement une soupape d'évacuation de pression (22).

8. Dispositif selon une des revendications 4 à 7, **caractérisé en ce qu'**à chaque cuve de baisse de pression (19, 19'), un manomètre (3) est associé.

9. Dispositif selon une des revendications 4 à 8, **caractérisé en ce que**, dans la cuve de stockage (1), un système de réglage du niveau de liquide est prévu.

10. Dispositif selon une des revendications 4 à 9, **caractérisé en ce que** les cuves pour le liquide et le gaz et la cuve de stockage (1) pour le liquide enrichi au gaz (2) sont une seule et même cuve de stockage, dans la partie inférieure de laquelle le liquide est stocké et dans la partie supérieure de laquelle le gaz est introduit avec une pression réglable.

11. Dispositif selon la revendication 10, **caractérisé en ce que** la cuve de stockage (1) est reliée avec conduction de liquide ou de gaz par l'intermédiaire d'un système fermé de canalisations (6, 7, 9) avec l'installation d'acheminement (5).

12. Dispositif selon la revendication 11, **caractérisé en ce que** l'installation d'acheminement (5) est une pompe centrifuge avec un injecteur à haute pression qui est reliée à la cuve de stockage (1) par l'intermédiaire du système de canalisations (6, 7, 9) formant un circuit.

13. Dispositif selon la revendication 12, **caractérisé en ce que** le système de canalisations (6, 7, 9) comprend, sur le côté d'aspiration de la pompe centrifuge, dans la partie supérieure de la cuve de stockage (1), une conduite de gaz (6) sortant de celle-ci et, dans la partie inférieure de la cuve de stockage (1), une conduite de liquide (7) sortant de celle-ci, qui se rejoignent juste en amont de la pompe centrifuge pour former une conduite commune.

14. Dispositif selon la revendication 12 ou 13, **caractérisé en ce que**, dans le système de canalisations (6, 7, 9), entre l'installation d'acheminement (5) et la cuve de stockage (1), une installation à remous (19) est installée.
